# EUROPEAN PATENT SPECIFICATION

(11) **EP 2 863 615 B1**
(45) Date of publication and mention of the grant of the patent: **27.07.2016**
(21) Application number: 14197619.1
(22) Date of filing: 28.10.2009
(51) Int. Cl.: H04L 29/08, H04L 29/06, H04W 4/00

(54) **Method, push system, and relevant devices for setting up push session**
Verfahren, Push-System und entsprechende Vorrichtung zum Einstellen der Push-Sitzung
Procédé de configuration, système de distribution sélective et dispositif correspondant pour des sessions de distribution sélective

(30) Priority: 23.12.2008 CN 200810187915
(43) Date of publication of application: 22.04.2015
(62) Divisional of application: 09834056.5
(73) Proprietor: Huawei Device Co., Ltd., Longgang District Shenzhen Guangdong 518129 (CN)
(72) Inventor: Fan, Shunan, Shenzhen Guangdong (CN); Wang, Lei, Shenzhen Guangdong (CN); Yang, Jian, Shenzhen Guangdong (CN); Dong, Ting, Shenzhen Guangdong (CN)
(74) Representative: Kreuz, Georg Maria

(56) References cited:
- "Support for multi-terminal case in Push 2.2 , OMA-CD-PUSH-2008--CR_PushOTA_Support_for_m ulti_terminal", , 11 December 2008 (2008-12-11), pages 1-3, XP055011426, Open Mobile Alliance Retrieved from the Internet: URL:http://member.openmobilealliance.org/f tp/public_documents/CD/PUSH/2008/OMA-CD-PU SH-2008-0190-CR_PushOTA_Support_for_multi_ terminal.zip [retrieved on 2011-11-07]
- "OMA Push using SIP , OMA-TS-SIP_Push-V1_0-20080829-D", , 29 August 2008 (2008-08-29), pages 1-51, XP055011383, Open Mobile Alliance Retrieved from the Internet: URL:http://member.openmobilealliance.org/f tp/Public_documents/cd/Permanent_documents /OMA-TS-SIP_Push-V1_0-20080829-D.zip [retrieved on 2011-11-07]
- "Push Over The Air, OMA-TS-PushOTA-V2_2-20081126-D , Draft Version 2.2 - 26 Nov 2008", , 26 November 2008 (2008-11-26), pages 1-69, XP055011417, Open Mobile Alliance Retrieved from the Internet: URL:http://member.openmobilealliance.org/f tp/Public_documents/cd/Permanent_documents /OMA-TS-Push_Message-V2_2-20081126-D.zip [retrieved on 2011-11-07]
- "Multi-terminals Situation in SIP Push, OMA-Cd-PUSH-2007-CR_Multi_terminals_situat ion_in_SIP_Push", , 18 February 2008 (2008-02-18), pages 1-16, XP055011412, Open Mobile Alliance Retrieved from the Internet: URL:http://member.openmobilealliance.org/f tp/public_documents/CD/PUSH/2007/OMA-CD-PU SH-2007-0079R05-CR_Multi_terminals_situati on_in_SIP_Push.zip [retrieved on 2011-11-07]
- ROSENBERG CISCO J: "Obtaining and Using Globally Routable User Agent (UA) URIs (GRUU) in the Session Initiation Protocol (SIP); draft-ietf-sip-gruu-14.txt", 5. JCT-VC MEETING; 96. MPEG MEETING; 16-3-2011 - 23-3-2011; GENEVA;(JOINT COLLABORATIVE TEAM ON VIDEO CODING OF ISO/IEC JTC1/SC29/WG11AND ITU-T SG.16 ); URL: HTTP://WFTP3.ITU.INT/AV-ARCH/JC TVC-SITE/- 17/03/2011, INTERNET ENGINEERING TASK FORCE, IETF, vol. sip, no. 14, 25 June 2007 (2007-06-25), XP015051687, ISSN: 0000-0004

## Description

This application claims priority to Chinese Patent Application No. 200810187915.2, filed with the Chinese Patent Office on December 23, 2008 and entitled "METHOD, PUSH SYSTEM, AND RELEVANT DEVICES FOR SETTING UP A PUSH SESSION".

### FIELD OF THE INVENTION

The present invention relates to the field of communication technologies, and in particular, to a method, a push system, and relevant devices for setting up a push session.

### BACKGROUND OF THE INVENTION

Push is a content distribution mechanism, and employs an operation mode of client/server mode, in which the server distributes required content without a request from the client for the pushed content. The distribution of the pushed content by the server is specifically: encapsulating a Push message into an Over-the-Air (OTA) Protocol message, such as an OTA-Wireless Session Protocol (OTA-WSP) message or an OTA-Hypertext Transfer Protocol (OTA-HTTP) message, and sending the encapsulated Push message to the client.

In the prior art, before sending the Push message to the client, the server needs to judge whether a connection with the client is set up, and if the connection is not set up, the connection needs to be set up between the client and the server through requesting the client to set up a connection with a network, so as to receive a corresponding Push message. In the prior art, the setting up of the connection based on a Session Initiation Protocol (SIP) between the client and the server is specifically implemented through the following steps. The server adds a user identity (ID) to a Session Initiation Request (SIR) message, and sends the SIR message to the client and requests the client to set up the connection with the server. The SIR message may contain information to instruct the client to return certain information, for example, to instruct the client to return preference information, capability information, and so on. The client receives the SIR message, sets up the connection with the server, and then may return information requested in the SIR message to the server according to the information in the SIR message.

During the practice and study of the prior art, the inventors of the present invention find that:
the method for setting up a push session in the prior art requests a client corresponding to a user ID to set up a connection with a server by adding the user ID to an SIR message. The user ID is a public user identity, and the format thereof employs a SIP Uniform Resource Identifier (URI), which is constructed through elements such as a user telephone number or host name (for example, SIP: user@company.com), and may bind multiple clients, such as a desktop computer, a notebook computer, a second generation mobile communication technology (2G) mobile phone, and so on. At this time, the SIR message is sent to all the clients corresponding to the user ID, and after setting up the connection with the server, all the clients receive a Push message, or all the clients return information requested in the SIR message to the server, thereby resulting in a waste of network resources. Moreover, some clients may not wish to receive the Push message sent by the server, thus resulting in poor user experience.

Document "Support for multi-terminal case in Push 2.2, OMA-CD-PUSH-2008-CR_PushOTA_support_for_multi_terminal", 11 December 2008, discloses on pages 1-3 that a user can have multiple terminals and that each terminal may have its own capabilities. Push offers users with several terminals an explicit way to ensure Push content is delivered across them. It is possible to deliver Push content to all or a subset of the terminals associated with the same user. When Push content is delivered to a subset of the terminals, PPG uses a terminal's device ID to uniquely identify each terminal.

Document "Push Over The Air, OMA-TS-PushOTA-V2_2-20081126-D, Draft Version 2.2-26 Nov 2008" discloses the delivery of content over the Air protocol to terminal from a Push Proxy Gateway (PPG), referred to as Push OTA protocol.

### SUMMARY OF THE INVENTION

Embodiments of the present invention provide a method a push system, and relevant devices for setting up a push session, thus saving network resources and improving user experience.

An embodiment of the present invention provides a method for setting up a push session, where the method includes:
obtaining device identity information of a client;
adding the device identity information of the client to an SIR message; and
sending the SIR message to the client according to the device identity information of the client to request the client to set up a push session connection based on a Session Initiation Protocol (SIP) with a server according to the SIR message.

The present invention provides a server, where the server includes:
an information obtaining unit, configured to obtain device identity information of a client;
a message adding unit, configured to add the device identity information of the client obtained by the information obtaining unit to the an SIR message; and
a request sending unit, configured to send the SIR message added by the message adding unit to the client according to the device identity information of the client to request the client to set up a push session connection based on a Session Initiation Protocol (SIP) with the server according to the SIR message.

It can be seen that, if the public user ID for identifying the client is bound with more than one client, and the server is required to set up a push session connection based on the SIP with a specific client, according to the method provided in the embodiments of the present invention, the server adds device identity information of the client to an SIR message and sends the SIR message to the client. In this way, for the multiple clients bound with the same public user ID, only the client needing to receive the Push message sets up the push session connection based on the SIP with the server. Thus, compared with the prior art, the network resources are saved, thereby avoiding the poor experience in the prior art that the client successively receives push session request messages.

### BRIEF DISCRIPTIONS OF THE DRAWINGS

To illustrate the technical solution according to the embodiments of the present invention or in the prior art more clearly, the accompanying drawings for describing the embodiments or the prior art are introduced briefly below. Apparently, the accompanying drawings in the following description are only some embodiments of the present invention, and persons of ordinary skill in the art can derive other drawings from the accompanying drawings without creative efforts.
FIG. 1 is a flow chart of a method for setting up a push session according to Embodiment 1 of the present invention;
FIG. 2 is a signaling flow chart of a method for setting up a push session according to Embodiment 2 of the present invention;
FIG. 3 is a flow chart of another method for setting up a push session according to Embodiment 2 of the present invention;
FIG. 4 is a signaling flow chart of a method for setting up a push session according to Embodiment 3 of the present invention;
FIG. 5 is a signaling flow chart of a method for setting up a push session according to Embodiment 4 of the present invention;
FIG. 6 is a schematic structural view of a push system according to System Embodiment 1 of the present invention;
FIG 7 is a schematic structural view of a server according to Device Embodiment 1 of the present invention;
FIG 8 is a schematic structural view of a server according to Device Embodiment 2 of the present invention;
FIG 9 is a schematic structural view of a client according to Device Embodiment 3 of the present invention; and
FIG 10 is a schematic structural view of a client according to Device Embodiment 4 of the present invention.

### DETAILED DESCRIPTION OF THE EMBODIMENTS

The technical solution of the present invention will be clearly described in the following with reference to the accompanying drawings. It is obvious that the embodiments to be described are only a part rather than all of the embodiments of the present invention. All other embodiments obtained by persons of ordinary skill in the art based on the embodiments of the present invention without creative efforts shall fall within the protection scope of the present invention.

### Embodiment 1

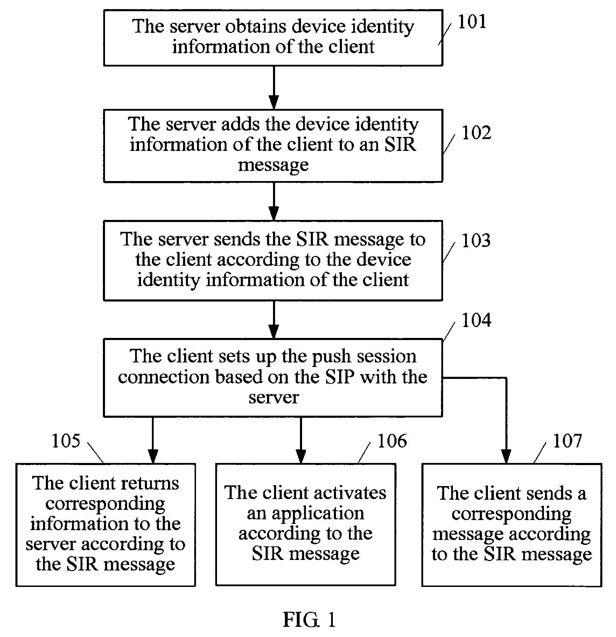

A method for setting up a push session is provided, and a push system in this embodiment includes a server and a client. FIG 1 is a flow chart of the method, which includes the following steps.

In step 101, the server obtains device identity information of the client.

It can be understood that, this process is a push session setting up process based on a SIP initiated by the server if the server and the client are not connected before the server sends an SIR message to the client. Furthermore, the method of this embodiment is a push session setting up method before the server sends a Push message to a specific client in the case that a public user ID for identifying the client is bound with multiple clients. Therefore, the server needs to query a current connection status with the server, subscription information for services, and preference information of the client, and information such as an ID of a client needing to be activated and an activation method if the client is not connected with the server.

The device identity information of the client herein refers to identity information capable of being routed to the client, for example, a Globally Routable User Agent (UA) URI (GRUU), a Universally Unique Identifier (UUID), an International Mobile Equipment Identity (IMEI), a Universal Resource Identifier (URI), a Unique Resource Name (URN), a Radio Frequency Identity (RFID), an Electronic Serial Number (ESN), a Media Access Control (MAC) address, a fingerprint, or other identities.

When obtaining the device identity information of the client, the server may query a server storing user information, for example, a presence server stores information (information such as a status and communication information) of a client bound with each public ID, and the server may also query subscription information of a client stored in the server itself, or strategy information for receiving corresponding services by the client. Other obtaining methods may exist, which does not limit the present invention.

In step 102, the server adds the device identity information of the client to an SIR message.

The device identity information of the client herein may be added to a header field and/or a value field and/or a message body of the SIR message.

It can be understood that, one or more of the following information may also be contained in the header field and/or the value field and/or the message body of the SIR message: application information for instructing the client to activate a corresponding application, such as an application ID and an application name; information for instructing the client to return, according to the SIR message, corresponding information, for example, instructing the client to return device capability information, and/or preference information, and/or security information, and/or subscription information, and/or information of refusing to set up a connection; and information for instructing the client to send, according to the SIR message, a corresponding message, such as a registration sending message or a capability sending message.

In step 103, the server sends the SIR message to the client according to the device identity information of the client, and requests the client to set up a push session connection based on the SIP with the server.

In this embodiment, the SIR message sent to the client may be of a message type such as a Short Message Service (SMS) message, a Hypertext Transfer Protocol (HTTP) message, a Wireless Session Protocol (WSP) message, a circuit switched domain message, a packet switched domain message, an Unstructured Supplementary Service Data (USSD) message, a signaling message, and a service message.

In step 104, after receiving the SIR message, the client sets up the push session connection based on the SIP with the server.

It can understood that, the client may judge whether a received SIP message is secure, and if yes, the client sets up the push session connection based on the SIP with the server.

If the SIP message further contains the information for instructing the client to return, according to the SIR message, the corresponding information, the client may further perform step 1C5 after step 104 to return information requested in the SIR message such as the device capability information, and/or preference information, and/or security information, and/or subscription information to the server. The corresponding information herein may be returned through a message such as a signaling message, a service message, an SMS message, a Push message, or a USSD message of the SIP message.

If the SIP message contains the application information, the client may perform step 106 to activate an application corresponding to the application information, and the application sends the corresponding information requested in the SIR message to the client, or registers with the client. For example, when receiving the message containing an application ID being a Dynamic Content Distribution (DCD) application ID, the client may activate a DCD application to register with the client, or return the corresponding information. It should be noted that no absolute sequential relation exists between steps 106 and 104, that is, the client may activate the application before or after setting up the push session.

If the SIP message contains the information for instructing the client to send the corresponding message according to the SIR message, the client may further perform step 107 after step 104 to send the message such as the capability sending message or the registration sending message requested in the SIP message to the server.

It can be seen that, if the pubic user ID for identifying the client is bound with more than one client, and the server is required to set up the push session connection based on the SIP with a specific client, in this embodiment, the server adds the found device identity information of the specific client to the SIR message, and the SIR message is routed to the specific client. In this way, only the client needing to be activated receives the SIR message and sets up the push session connection based on the SIP with the server to receive the Push message from the server. Compared with the prior art in which all the clients bound with the public user ID set up the connection with the server and receive the same Push message, in this embodiment, only the client that wishes to receive the Push message sets up the push session connection based on the SIP with the server, thus saving network resources and avoiding that multiple clients repeatedly receive the same message, thereby avoiding affecting the normal reception of other services due to the reception of multiple messages that are the same.

### Embodiment 2

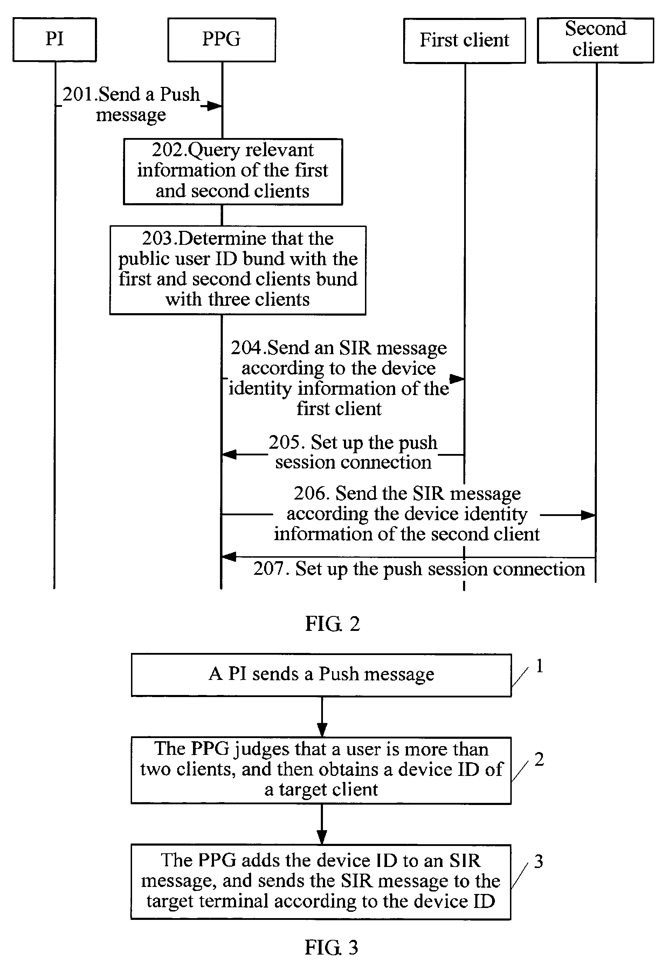

A method for setting up a push session is provided. A push system in this embodiment includes a Push Initiator (PI), a Push Proxy Gateway (PPG), and three clients bound with the same public user ID, for example, a mobile terminal, a personal computer, and a Personal Digital Assistant (PDA), and each client has different capability information and preference information. A combination of the PI and the PPG in the system is equivalent to the server in Embodiment 1. Assume that a Push message needs to be sent to a first client and a second client, FIG 2 is a signaling flow chart of the method, which includes the following steps.

In step 201, the PI generates a Push message, and sends the Push message and a public user ID to the PPG

In step 202, the PPG queries a current connection status with the PPG, preference information, and subscription information for services of a client needing to receive the Push message, and information such as device identity information of the client and an activation method if the client is not connected with the PPG. In this embodiment, the first and second clients are bound with the same public user ID, so relevant information of the first and second clients is searched for.

The PPG confirms that the Push message needs to be sent to the first and second clients according to the found information and the received Push message, and neither of the two clients is connected with the PPG, so that a setting up process of a push session connection based on a SIP should be performed first.

In step 203, the PPG judges, according the found information, whether the public user ID bound with the first and second clients is further bound with other clients than the first and second clients, and if yes, step 204 is performed. Here, assume that the first client and the second client are bound with the same public user ID, and the public user ID is further bound with a third client.

Here, the PPG judges whether a user has multiple terminals, or whether the user registers with multiple terminals.

In step 204, the PPG adds the device identity information of the first client found in step 202 to an SIR message, and sends the SIR message to the first client according to the device identity information of the first client. The method in this step is as described in Embodiment 1, and the details will not be described herein again.

It should be understood that in this step, other information such as the public user ID may be further added to the SIR message, and in this step, the SIR message is routed to the first client by using the device identity information of the client.

In step 205, the first client may judge whether to set up the push session connection based on the SIP with the PPG. for example, the judgment may be performed according to information such as whether the received SIR message is secure and whether a PPG address for setting up the connection is a server address required in the subscription of the first client; or, the first client may not perform the judgment, but directly sets up the connection with the PPG In this way, the Push message sent by the PPG is received, and/or a message is sent to the given PPG address, and/or information requested by the PPG is sent to the given PPG address.

The PPG address information given by the SIR message herein may be the address of the PPG from which the SIR message is sent, or other information about the PPG address. In the latter case, said other information about the PPG address is for instructing the client to set up a connection with the given PPG address, and/or to send the message and/or send the information requested by the PPG to the given PPG address.

In step 206, the PPG adds the device identity information of the second client found in step 202 to the SIR message, and sends the SIR message to the second client according to the device identity information of the second client.

In step 207, the second client receives the SIR message, sets up the push session connection based on the SIP with the PPG, and/or sends a message to the given PPG address, and/or sends information requested by the PPG to the given PPG address; and the operation method is similar to that of the first client in step 205.

When the SIR message is sent to the specific client in steps 204 and 206, the SIR message may be sent after being encapsulated with a protocol message such as an HTTP message, or a SIP message, or an SMS message, or a WSP message, or a circuit switched domain message, or a packet switched domain message.

The above process is a briefly described process for implementing the method; each message may have a corresponding response message, and the details will not be described herein again. Furthermore, no absolute sequential relation exists between the above steps, for example, in steps 204 to 207, it is only required that the clients receive the SIR message before push sessions are set up; as for which client receives the SIR message first, it is not the focus of the present invention.

In this embodiment, if the pubic user ID for identifying the client is bound with more than one client, and the server is required to set up the push session connection based on the SIP with a specific client, the server adds the found device identity information of the specific client to the SIR message, and the SIR message is routed to the specific client. In this way, only the client needing to be activated receives the SIR message, and sets up the push session connection based on the SIP with the server to receive the Push message from the server. Compared with the prior art in which all clients bound with the public user ID set up the connection with the server and receive the same Push message, only the client that wishes to receive the Push message sets up the push session connection with the server, thus saving network resources.

Another specific embodiment of a method for setting up a push session may be implemented through the following steps. FIG. 3 is a flow chart of the method, which includes the following steps.

In step 1, a PI generates a Push message, and sends the Push message and a public user ID to a PPG.

In step 2, after receiving the Push message, the PPG judges whether the public user ID is bound with two or more clients, and if the public user ID is bound with two or more clients, the PPG queries a current connection status with the PPG, and/or preference information, and/or subscription information for services of a client needing to receive the Push message, and information such as device identity information of the client and an activation method if the client is not connected with the PPG; in this embodiment, a first client and a second client are bound with the same public user ID, so the PPG searches for relevant information of the first and second clients; of course, if the public user ID is not bound with two or more clients, the method according to the prior art may be performed.

When initiating the Push message, the PI is incapable of knowing whether the public user ID is bound with two or more clients, and the PPG is required to perform a judgment first.

Specifically, according to the received public user ID, the PPG obtains preference information and subscription information for services of a user corresponding to the public user ID, and information such as a connected terminal that the user wishes to be activated by a network and an activation method if the user is not connected with the network, and confirms, according to the found information and the received Push message, that the Push message needs to be sent to the first client, and the first client is not connected with the PPG, so that a setting up process of a push session connection based on a SIP should be performed first, and the relevant information of the first client should be obtained.

In step 3, the PPG adds the device identity information of the first client found in step 2 to an SIR message, and sends the SIR message to the first client according to the device identity information of the first client The subsequent method is as described in Embodiment 1, and the details will not be described herein again.

### Embodiment 3

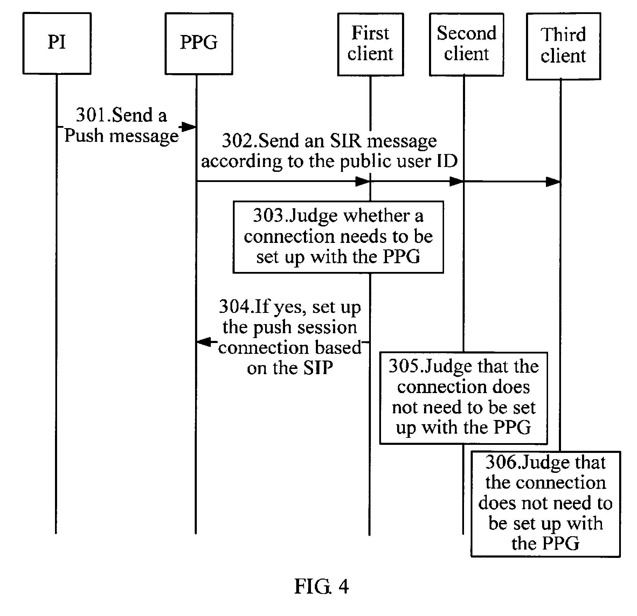

A method for setting up a push session is provided. A push system in this embodiment includes a PI, a PPG, and three clients bound with the same public user ID, for example, a mobile terminal, a personal computer, and a PDA, and each client has different capability information and preference information. A combination of the PI and the PPG in the system is equivalent to the server in Embodiment 1, and assume that a Push message needs to be sent to a first client. FIG 4 is a signaling flow chart of the method, which includes the following steps.

In step 301, the PI generates a Push message, and sends the Push message and a public user ID corresponding to a client receiving the message to the PPG.

In step 302, the PPG queries that the first client needing to receive the Push message is not connected with the PPG, adds the public user ID identifying the first client to an SIR message, and routes the SIR message to all clients bound with the public user ID according to the public user ID contained in the SIR message.

In step 303, the first client receives the SIR message, and judges whether a push session connection based on a SIP needs to be set up with the PPG according to information and a strategy of the client itself and the SIR message, and if yes, step 304 is performed.

The information of the client itself herein is security information, and/or set preference information, and/or capability information, and/or a user judgment. For example, a judgment is made according to preference setting information, information of a connection with the PPG, and subscription information for services of the first client. This process may be completed by the first client automatically, or triggered by a user.

In step 304, the first client sets up the push session connection based on the SIP with the PPG, and receives the Push message sent by the PPG

It can be understood that, after setting up the connection with the PPG, the first client may send a requested message or information to the PPG, for example, a registration sending message, and/or device capability information, and/or preference information, and/or security information, and/or subscription information, and/or information of refusing to set up the connection of the first client. The information may be obtained from an application.

If the SIR message contains application information, the first client may activate an application corresponding to the application information to obtain the corresponding information to be returned to the server or register with the client.

In step 305, a second client receives the SIR message, and as in step 303, if it is judged that the push session connection based on the SIP does not need to be set up with the PPG, the step of connecting to the PPG is not performed.

In step 306, a third client receives the SIR message, and as in step 303, if it is judged that the push session connection based on the SIP does not need to be set up with the PPG, the step of connecting to the PPG is not performed.

When the SIR message is sent to all the clients in step 302, the SIR message may be sent after being encapsulated with a protocol message such as an HTTP message, or a SIP message, or an SMS message, or a WSP message, or a circuit switched domain message, or a packet switched domain message.

Furthermore, no absolute sequential relation exists between the above steps, for example, in steps 303 to 306, it is only required that a specific client receives the SIR message before the push session connection based on the SIP is set up; as for which client receives the SIR message first, it is not the focus of the present invention.

The above process is a briefly described process for implementing the method; each message may have a corresponding response message, and the details will not be described herein again.

In this embodiment, the server sends the SIR message to all the clients bound with the public user ID, and the clients judge whether the push session connection based on the SIP needs to be set up with the server, thus achieving the same technical effect as Embodiment 2 without making any change to the server; furthermore, the implementation of the client is simple.

### Embodiment 4

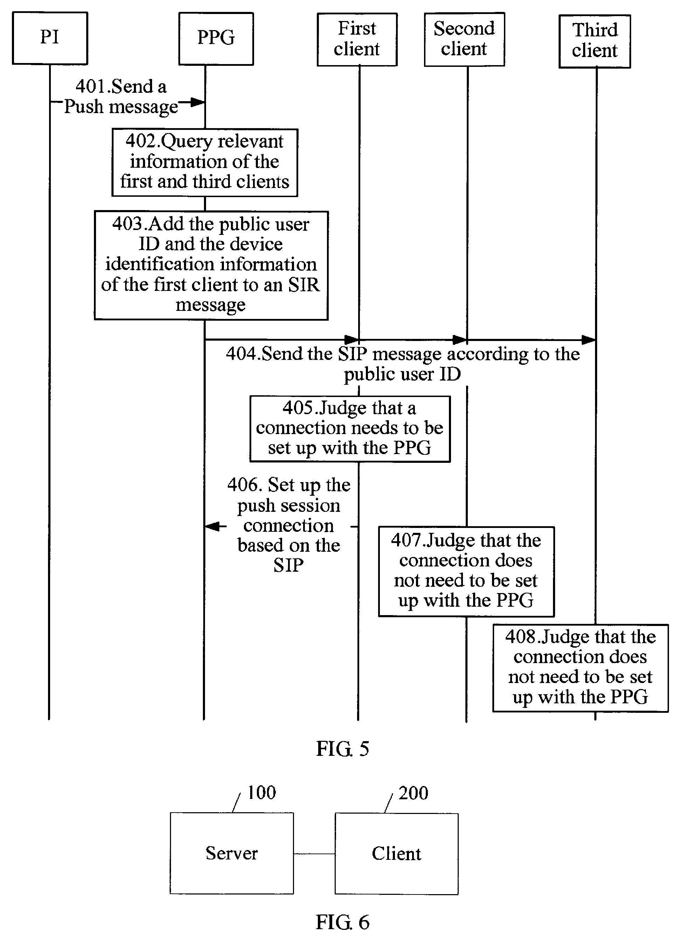

A method for setting up a push session is provided. A push system in this embodiment includes a PI, a PPG, and three clients bound with the same public user ID, for example, a mobile terminal, a personal computer, and a PDA, and each client has different capability information and preference information. A combination of the PI and the PPG in the system is equivalent to the server in Embodiment 1, and assume that a Push message needs to be sent to a first client and a third client. FIG 5 is a signaling flow chart of the method, which includes the following steps.

In step 401, the PI generates a Push message, and sends the Push message and a public user ID corresponding to a client receiving the message to the PPG.

In step 402, the PPG queries a current connection status with the PPG, preference information, and subscription information for services of the client receiving the Push message, and information such as device identity information of the client and an activation method if the client and the PPG are not connected. In this embodiment, relevant information of the first and third clients needs to be queried.

The PPG confirms that the Push message needs to be sent to the first client and third client according to the found information and the received Push message, and the first client is not connected with the PPG, so that a setting up process of a push session based on a SIP should be performed first, and step 403 should be performed; the third client is already connected with the PPG, and is capable of receiving the Push request message directly.

In step 403, the PPG adds the public user ID and the device identity information of the first client found in step 402 to an SIR message.

In this step, the device identity information is the information for uniquely identifying the first client, and may be added to a header field or a message body of the SIR message, rather than being used for routing the SIR message. Table 1 and Table 2 are SIP messages formed by adding the device identity information of the first client to the header field and the message body of the SIR message respectively. The SIR messages are encapsulated with SIP message.

**Table 1 Adding the device identity information to the header field of the SIR message**

| **Parameter** | **Value** |
|---|---|
| Client Address | sip:+43-8323546@mobilkom. |
| | gr=urn:uuid:f81d4fae-7dec-11d0-a765-00a0c91e6bf6 (Device identity information) |
| Server Address | |
| Push Headers | X-Wap-Application-Id: x-wap-application:push.sia |
| | Content-Type: application/vnd.wap.sia |
| SIA Content | |

**Table 2 Adding the device identity information to the message body of the SIR message**

| **Parameter** | **Value** |
|---|---|
| Client Address | sip:+43-8323546@mobilkom. |
| Server Address | |
| Push Headers | X-Wap-Application-Id: x-wap-application:push.sia |
| | Content-Type: application/vnd.wap.sia |
| SIA Content | gr=urn:uuid:f81d4fae-7dec-11d0-a765-00a0c91e6bf6 (Device identity information) |

In step 404, according to the public user ID, the PPG sends the SIP message to all clients corresponding to the public user ID.

In step 405, the first client receives the SIR message, parses the SIR message to obtain the device identity information, and matches the device identity information with information of the first client itself, and if the information of the first client matches the device identity information, it is judged that a push session connection based on the SIP needs to be set up with the PPG, and step 406 is performed.

In step 406, the first client sets up the push session based on the SIP with the PPG, and receives the Push message sent by the PPG.

It can be understood that, after setting up the connection with the PPG, the first client may send a requested message or information to the PPG, for example, a registration sending message, and/or device capability information, and/or preference information, and/or security information, and/or subscription information, and/or information of refusing to set up the connection of the first client. The information may be obtained from an application.

If the SIR message contains application information, the first client may activate an application corresponding to the application information to obtain the corresponding information returned to the server or register with the client.

In step 407, after receiving the SIR message, a second terminal matches the device identity information with information of the second client as in step 405, and finds that the device identity information does not match a device ID of the second terminal itself, thus not sending a request for setting up the connection to the PPG

In step 408, after receiving the SIR message, a third terminal finds that the third terminal is already connected with the PPG, thus not sending the request for setting up the connection to the PPG.

When the SIR message is sent to all the clients in step 404, the SIR message may be sent after being encapsulated with a protocol message such as an HTTP message, or a SIP message, or an SMS message, or a WSP message, or a circuit switched domain message, or a packet switched domain message.

Furthermore, no absolute sequential relation exists between the above steps, for example, in steps 405 to 408, it is required that a specific client receives the SIR message before the push session connection based on the SIP is set up; as for which client receives the SIR message first, it is not the focus of the present invention.

The above process is a briefly described process for implementing the method; each message may have a corresponding response message, and the details will not be described herein again.

It should be noted that in step 402, the PPG may forward the Push message to a SIP/IP network side device, and the SIP/IP network side device performs the process as in steps 402 to 404, and the details will not be described herein again.

The difference between this embodiment and Embodiment 3 lies in that, the SIR message sent by the server to all the clients bound with the public user ID contains device identity information of a client needing to set up a push session connection with the server. In this way, when judging whether a push session connection based on the SIP needs to be set up with the server, a client only needs to judge whether information of itself matches the device identity information, thus achieving the same technical effect as Embodiment 3, and the judgment range of the client is small.

### System Embodiment 1

A push system is provided. FIG 6 is a schematic structural view of the push system, which includes a server 100 and a client 200.

The server 100 is configured to obtain device identity information of the client 200, add the device identity information of the client 200 to an SIR message, send the SIR message to the client 200 according to the device identity information of the client 200, and request the client 200 to set up, according to the SIR message, a push session connection based on a SIP with the server 100.

The SIR message sent from the server 100 to the client may be encapsulated with a message such as an HTTP message, or a SIP message, or an SMS message, or an WSP message, or a circuit switched domain message, or a packet switched domain message.

The client 200 is configured to receive the SIP message sent by the server 100, and set up the push session connection based on the SIP with the server.

In the push system of this embodiment, the server 100 adds the device identity information of the client 200 to the SIR message and sends the SIR message to the client 200, and the client 200 sets up the push session connection based on the SIP with the server 100 and receives a Push message. Compared with the prior art in which all the clients bound with a public user ID set up the connection with the server and receive the same Push message, the present invention saves network resources.

### System Embodiment 2

A push system is provided, including a server and a client.

The server is configured to add a public ID of a client to an SIR message, send the SIR message to all clients corresponding to the public user ID, and request all the clients to determine, according to the SIR message, whether a push session connection based on a SIP needs to be set up with the server.

The client is configured to receive the SIR message containing the public user ID sent by the server, and set up the push session connection based on the SIP with the server when determining, according to the SIR message and information of the client itself, that the push session connection based on the SIP needs to be set up with the server.

It can be understood that in this embodiment, if the SIR message sent by the server further contains device identity information, the client matches the device identity information with the information of the client itself, and if they match, the client determines that the push session connection based on the SIP needs to be set up with the server.

In the push system of this embodiment, the server adds the public user ID of the client to the SIR message and sends the SIR message to all the clients bound with the public user ID, and all the clients judge whether to set up the push session connection based on the SIP with the server according to the SIR message and receive a Push message. Compared with the prior art in which all the clients bound with the public user ID set up the connection with the server and receive the same Push message, in the present invention, only the client needing to receive the Push message sets up the connection with the server, thus saving network resources.

### Device Embodiment 1

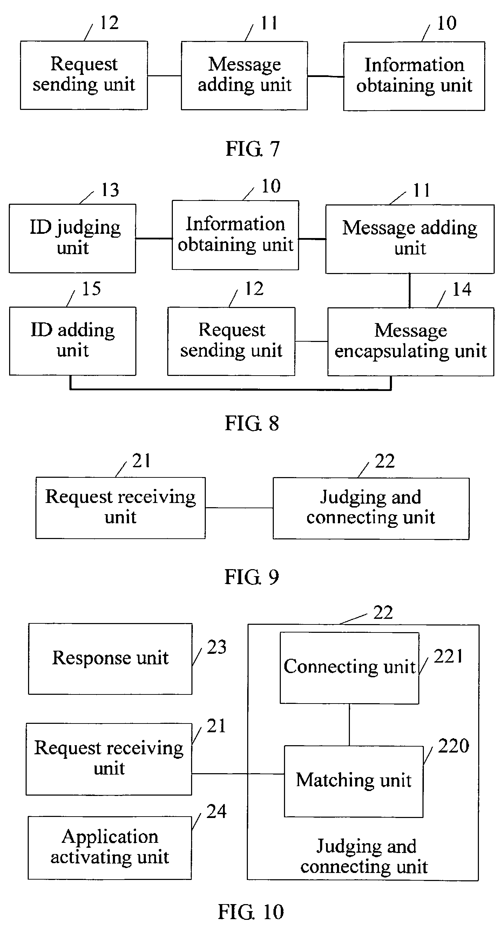

A server is provided. FIG 7 is a schematic structural view of the server, which includes an information obtaining unit 10, a message adding unit 11, and a request sending unit 12.

The information obtaining unit 10 is configured to obtain device identity information of a client.

The message adding unit 11 is configured to add the device identity information of the client obtained by the information obtaining unit 10 to an SIR message.

The device identity information of the client may be added to a header field and/or a value field and/or a message body of the SIR message. Other application information may also be added to the SIR message for instructing the client to return information such as device capability information, and/or preference information, and/or security information, and/or subscription information, and/or information of refusing to set up the connection.

The request sending unit 12 is configured to send the SIR message added by the message adding unit 11 to the client according to the device identity information of the client, and request the client to set up a push session connection based on a SIP with the server according to the SIR message.

In the server of this embodiment, the message adding unit 11 adds identity information of the client to a push session request message, and the request sending message 12 sends the SIP message to the client. In this way, only the client corresponding to the identity information sets up the push session connection based on the SIP with the server and receives the Push message. Compared with the prior art in which all the clients bound with the public user ID set up the connection with the server and receive the same Push message, the present invention saves network resources.

### Device Embodiment 2

A server is provided. FIG 8 is a schematic structural view of the server. Compared with Device Embodiment 1, an ID judging unit 13 and a message encapsulating unit 14 are added in this embodiment.

The ID judging unit 13 is configured to judge whether the public user ID bound with the client is further bound with other clients than the client, and if yes, notify the information obtaining unit 10 of obtaining the device identity information of the client.

The message encapsulating unit 14 is configured to encapsulate the SIR message added by the message adding unit 11 with an HTTP message, or a SIP message, or an SMS message, or a WSP message, or a circuit switched domain message, or a packet switched domain message.

Optionally, the server in this embodiment may further include an ID adding unit 15, configured to add the public user ID identifying the client to the SIR message.

It can be understood that, when judging that the public user ID of the client is bound with multiple clients, the ID judging unit 13 notifies the information obtaining unit 10 of obtaining the device identity information of the specific client, and adds the device identity information to the SIR message through the message adding unit 11, the message encapsulating unit 14 encapsulates the SIR message, and finally the request sending unit 12 sends the SIR message to the specific client.

Since the server in this embodiment further includes the ID adding unit 15, the server may add both the public user ID and the device identity information of the client to the SIR message through the ID adding unit 15 and the message adding unit 11, the message encapsulating unit 14 encapsulates the SIR message, and the request sending unit 12 sends the SIR message to all the clients corresponding to the public user ID, so as to request all the clients to determine, according to the device identity information, whether a push session connection based on the SIP needs to be set up with the server according to the SIR message.

Compared with the server of Device Embodiment 1, the server of this embodiment judges whether the public user ID is bound with multiple clients through the ID judging unit 13. In this way, when the public user ID identifies only one client, the device identity information of the client may not need to be obtained, thereby simplifying the information processing in the setting up of a Push.

### Device Embodiment 3

A client is provided. FIG 9 is a schematic structural view of the client, which includes a request receiving unit 21 and a judging and connecting unit 22.

The request receiving unit 21 is configured to receive an SIR message.

The judging and connecting unit 22 is configured to judge whether a push session connection based on a SIP needs to be set up with the server according to the SIR message and information of the client itself if the SIR message received by the request receiving unit 21 contains a public user ID, and if yes, set up the push session connection based on the SIP with the server.

The information of itself herein may be security information, and/or set preference information, and/or capability information, and/or a user judgment.

In the client of this embodiment, the judging and connecting unit 22 judges whether the push session connection based on the SIP needs to be set up with the server according to the SIR message, and sets up the push session connection based on the SIP with the server and receives a Push message only when the judging result is yes. Compared with the prior art in which all the clients bound with the public user ID set up the connection with the server and receive the same Push message, in the present invention, only the client needing to receive the Push message sets up the connection with the server, thus saving network resources.

### Device Embodiment 4

A client is provided. FIG 10 is a schematic structural view of the client. Compared with the client of Device Embodiment 3, in the client of this embodiment, a detailed structure of the judging and connecting unit 22 is provided, and a response unit 23 and an application activating unit 24 are added.

The judging and connecting unit 22 includes a matching unit 220 and a connecting unit 221. The matching unit 220 is configured to match device identity information with information of itself when the SIR message received by the request receiving unit 21 contains the device identity information; and the connecting unit 221 is configured to set up the push session connection based on the SIP with the server when the matching result of the matching unit 220 is that the information of itself matches the device identity information.

A corresponding message in the SIR message may be information such as device capability information, and/or preference information, and/or security information, and/or subscription information, and/or information of refusing to set up the connection.

The response unit 23 is configured to return, according to instruction information in the SIR message, corresponding information to the server or send a corresponding message to the server, when the SIR message received by the request receiving unit 21 contains the information for instructing the client to return the corresponding information or send the corresponding message according to the SIR message.

The application activating unit 24 is configured to activate an application corresponding to application information so as to obtain the corresponding information returned to the server or register with the client, when the SIR message received by the request receiving unit 21 contains the application information.

It can be understood that the response unit 23 returns the information or sends the message to the server only after the judging and connecting unit 22 sets up the push session connection based on the SIP with the server, while the application activating unit 24 may perform activation at any time when the connection is set up with the server. However, if the application activating unit 24 activates the application only after the connection is set up with the server, the exchange of information between communication devices may be reduced.

Compared with the client of Device Embodiment 3, in the client of this embodiment, the matching unit 220 judges whether the connection needs to be set up with the server by comparing the device identity information contained in the push session request message with the information of the client, which is easy to implement and has a small judgment range.

It can be seen that, if the public user ID for identifying the client is bound with more than one client, and the server is required to set up the push session connection with a specific client, in the method according to the present invention, the server adds the device identity information of the client to the SIR message and routes the SIR message to the client; or the server sends the SIR message to all the clients corresponding to the public user ID identifying the client, and the clients judge whether the push session connection based on the SIP needs to be set up with the server. In this way, for the multiple clients bound with the same public user ID, only the client needing to receive the Push message sets up the push session connection based on the SIP with the server. Thus, compared with the prior art, the network resources are saved, thereby avoiding the poor experience in the prior art that the client successively receives push session request messages.

The method for setting up a push session, the push system, and the relevant devices are described in detail above. The principle and implementation of the present invention are described herein through specific embodiments. The description about the embodiments of the present invention is merely provided for ease of understanding of the method and core ideas of the present invention. Persons of ordinary skill in the art can make variations and modifications to the present invention in terms of the specific implementations and application scopes according to the ideas of the present invention. Therefore, the specification shall not be construed as a limit to the present invention.

In a fifth embodiment, a method for setting up a push session, comprising: obtaining device identity information of a client; adding the device identity information of the client to a Session Initiation Request (SIR) message; and sending the SIR message to the client according to the device identity information of the client, and requesting the client to set up a push session connection based on a Session Initiation Protocol (SIP) with a server according to the SIR message.

In a further development of the fifth embodiment, the adding the device identity information of the client to the SIR message comprises: adding the device identity information of the client to a header field and/or a value field and/or a message body of the SIR message.

In a further development of the fifth embodiment, after the adding the device identity information of the client to the SIR message, the method further comprises: encapsulating the SIR message with a Hypertext Transfer Protocol (HTTP) message, or a SIP message, or a Short Message Service (SMS) message, or a Wireless Session Protocol (WSP) message, or a circuit switched domain message, or a packet switched domain message.

In a further development of the fifth embodiment, before the obtaining the device identity information of the client, the method further comprises: judging whether a public user identity (ID) bound with the client is further bound with other clients than the client, and if yes, obtaining the device identity information of the client.

In a further development of the fifth embodiment, before the adding the device identity information of the client to the SIR message, the method further comprises: judging whether a public user ID bound with the client is further bound with other clients than the client, and if yes, adding the device identity information of the client to the SIR message.

In a further development of the fifth embodiment, the SIR message further contains: application information for instructing the client to activate a corresponding application, and/or information for instructing the client to return corresponding information or send a corresponding message according to the SIR message.

In a further development of the fifth embodiment, the instructing the client to return the corresponding information according to the SIR message is: instructing the client to return device capability information, and/or preference information, and/or security information, and/or subscription information, and/or information of refusing to set up the connection.

In a further development of the fifth embodiment, the method further comprising: adding the public user ID identifying the client to the SIR message; and sending the SIR message to all clients corresponding to the public user ID, and requesting all the clients to determine, according to the device identity information, whether the push session connection based on the SIP needs to be set up with the server according to the SIR message.

In a sixth embodiment, a method for setting up a push session, comprising: receiving a Session Initiation Request (SIR) message; if the SIR message contains a public user identity (ID), judging, according to the SIR message and information of a client itself, whether a push session connection based on a Session Initiation Protocol (SIP) needs to be set up with a server, and if yes, setting up the push session connection based on the SIP with the server.

In a further development of the sixth embodiment, if the SIR message contains device identity information, the judging whether the push session connection based on the SIP needs to be set up with the server according to the SIR message and the information of the client itself comprises: matching the device identity information with the information of the client itself, and if the information of the client itself matches the device identity information, judging that the push session connection based on the SIP needs to be set up with the server.

In a further development of the sixth embodiment, the information of the client itself is security information, and/or set preference information, and/or capability information, and/or a user judgment.

In a further development of the sixth embodiment, the information of the client itself is device identity information.

In a further development of the sixth embodiment, if the SIR message further contains information for instructing the client to return corresponding information or send a corresponding message according to the SIR message, after the setting up the push session connection based on the SIP with the server, the method further comprises: returning the corresponding information to the server or sending the corresponding message to the server according to the instruction information in the SIR message.

In a further development of the sixth embodiment, the corresponding information comprises: device capability information, and/or preference information, and/or security information, and/or subscription information, and/or information of refusing to set up the connection of the client.

In a further development of the sixth embodiment, if the SIR message contains application information, the method further comprises: activating an application corresponding to the application information, so as to obtain corresponding information returned to the server or register with the client.

In a third system embodiment, a push system, comprising: a server, configured to add a public identity (ID) of a client to a Session Initiation Request (SIR) message, send the SIR message to all clients corresponding to the public user ID, and request all the clients to determine whether a push session connection based on a Session Initiation Protocol (SIP) needs to be set up with the server according to the SIR message; and a client, configured to receive the SIR message containing the public user ID sent by the server, and set up the push session connection based on the SIP with the server when determining that the push session connection based on the SIP needs to be set up with the server according to the SIR message and information of itself.

In a further development of the third system embodiment, if the SIR message sent by the server further contains device identity information, the client matches the device identity information with the information of itself, and if they match, determines that the push session connection based on the SIP needs to be set up with the server.

In a fifth device embodiment, a server, comprising: an information obtaining unit, configured to obtain device identity information of a client; a message adding unit, configured to add the device identity information of the client obtained by the information obtaining unit to a Session Initiation Request (SIR) message; and a request sending unit, configured to send the SIR message added by the message adding unit to the client according to the device identity information of the client, and request the client to set up a push session connection based on a Session Initiation Protocol (SIP) with the server according to the SIR message.

In a further development of the fifth device embodiment, the server further comprising a message encapsulating unit, configured to encapsulate the SIR message added by the message adding unit with a Hypertext Transfer Protocol (HTTP) message, a SIP message, a Short Message Service (SMS) message, a Wireless Session Protocol (WSP) message, a circuit switched domain message, or a packet switched domain message.

In a further development of the fifth device embodiment, the server further comprising an identity (ID) judging unit, configured to judge whether a public user ID bound with the client is further bound with other clients than the client, and if yes, notify the information obtaining unit of obtaining the device identity information of the client.

In a further development of the fifth device embodiment, the server further comprising an ID adding unit, configured to add the public user ID identifying the client to the SIR message, the request sending unit is further configured to send the SIR message processed by the ID adding unit to all clients corresponding to the public user ID, and request all the clients to determine, according to the device identity information, whether the push session connection based on the SIP needs to be set up with the server according to the SIR message.

In a sixth device embodiment, a client, comprising: a request receiving unit, configured to receive a Session Initiation Request (SIR) message; and a judging and connecting unit, configured to judge whether a push session connection based on a Session Initiation Protocol (SIP) needs to be set up with a server according to the SIR message and information of itself if the SIR message received by the request receiving unit contains a public user identity (ID), and if yes, set up the push session connection based on the SIP with the server.

In a further development of the sixth device embodiment, the judging and connecting unit comprises: a matching unit, configured to match device identity information with the information of itself when the SIR message received by the request receiving unit contains the device identity information; and a connecting unit, configured to set up the push session connection based on the SIP with the server when a matching result of the matching unit is that the information of itself matches the device identity information.

In a further development of the sixth device embodiment, the client further comprising a response unit, configured to return corresponding information to the server or send a corresponding message to the server according to instruction information in the SIR message when the SIR message received by the request receiving unit contains the information for instructing the client to return the corresponding information or send the corresponding message according to the SIR message.

In a further development of the sixth device embodiment, the client further comprising an application activating unit, configured to activate an application corresponding to application information so as to obtain corresponding information returned to the server or register with the client, when the SIR message received by the request receiving unit contains the application information.

## Claims

1. A method for setting up a push session, comprising:
obtaining device identity information of a client corresponding to a public user identity bound with multiple clients;
adding the device identity information of the client to a Session Initiation Request, SIR, message; and
sending the SIR message to the client according to the device identity information of the client to request the client to set up a push session connection based on a Session Initiation Protocol, SIP, with a server according to the SIR message.

2. The method according to claim 1, wherein the adding the device identity information of the client to the SIR message comprises:
adding the device identity information of the client to a header field and/or a value field and/or a message body of the SIR message.

3. The method according to claim 1 or 2, wherein after the adding the device identity information of the client to the SIR message, the method further comprises:
encapsulating the SIR message with a Hypertext Transfer Protocol, HTT, message, or a SIP message, or a Short Message Service, SMS, message, or a Wireless Session Protocol (WSP) message, or a circuit switched domain message, or a packet switched domain message.

4. The method according to claim 1, 2 or 3, wherein before the obtaining the device identity information of the client, the method further comprises: when a public user identity, ID, bound with the client is further bound with other clients than the client, obtaining the device identity information of the client.

5. The method according to one of the claims 1 to 3, wherein before the adding the device identity information of the client to the SIR message, the method further comprises: when a public user ID bound with the client is further bound with other clients than the client, adding the device identity information of the client to the SIR message.

6. The method according to any one of claims 1 to 5, wherein the SIR message further contains: application information for instructing the client to activate a corresponding application, and/or information for instructing the client to return corresponding information or send a corresponding message according to the SIR message.

7. The method according to claim 6, wherein the instructing the client to return the corresponding information according to the SIR message is: instructing the client to return device capability information, and/or preference information, and/or security information, and/or subscription information, and/or information of refusing to set up the connection.

8. The method according to any one of claims 1 to 5, further comprising: adding the public user ID identifying the client to the SIR message; and
the method further comprising:
sending the SIR message to all clients corresponding to the public user ID, and requesting all the clients to determine, according to the device identity information, whether the push session connection based on the SIP needs to be set up with the server according to the SIR message.

9. A server, comprising:
an information obtaining unit, configured to obtain device identity information of a client corresponding to a public user identity bound with multiple clients;
a message adding unit, configured to add the device identity information of the client obtained by the information obtaining unit to a Session Initiation Request, SIR, message; and
a request sending unit, configured to send the SIR message added by the message adding unit to the client according to the device identity information of the client to request the client to set up a push session connection based on a Session Initiation Protocol, SIP, with the server according to the SIR message.

10. The server according to claim 9, further comprising a message encapsulating unit, configured to encapsulate the SIR message added by the message adding unit with a Hypertext Transfer Protocol, HTTP, message, a SIP message, a Short Message Service, SMS, message, a Wireless Session Protocol, WSP, message, a circuit switched domain message, or a packet switched domain message.

11. The server according to claim 9 or 10, further comprising an identity, ID, judging unit, configured to when a public user ID bound with the client is further bound with other clients than the client, notify the information obtaining unit of obtaining the device identity information of the client.

12. The server according to claim 9, 10 or 11, further comprising an ID adding unit, configured to add the public user ID identifying the client to the SIR message, wherein
the request sending unit is further configured to send the SIR message processed by the ID adding unit to all clients corresponding to the public user ID, and request all the clients to determine, according to the device identity information, whether the push session connection based on the SIP needs to be set up with the server according to the SIR message.

## Patentansprüche

1. Verfahren zum Aufbauen einer "Push"-Sitzung, das umfasst:
Erhalten von Informationen eines Clients über eine Gerätekennung, die einer öffentlichen Anwenderkennung, die mit mehreren Clients gebunden ist, entspricht;
Hinzufügen der Informationen des Clients über die Gerätekennung zu einer "Session Initiation Request"-Nachricht, "SIR"-Nachricht; und
Senden der "SIR"-Nachricht an den Client entsprechend den Informationen des Clients über die Gerätekennung, um bei dem Client anzufragen, eine "Push"-Sitzungsverbindung auf der Basis eines "Session Initiation Protocol, SIP" mit einem Server gemäß der "SIR"-Nachricht aufzubauen.

2. Verfahren nach Anspruch 1, wobei das Hinzufügen der Informationen des Clients über die Gerätekennung zu der "SIR"-Nachricht umfasst:
Hinzufügen der Informationen des Clients über die Gerätekennung zu einem "Header"-Feld und/oder zu einem Wertefeld und/oder zu einem Nachrichtenkörper der "SIR"-Nachricht.

3. Verfahren nach Anspruch 1 oder 2, wobei nach dem Hinzufügen der Informationen des Clients über die Gerätekennung zu der "SIR"-Nachricht das Verfahren ferner umfasst:
Einkapseln der "SIR"-Nachricht mit einer "Hypertext Transfer Protocol"-Nachricht, HTTP-Nachricht, oder mit einer "SIP"-Nachricht oder mit einer "Short Message Service"-Nachricht, SMS-Nachricht, oder mit einer "Wireless Session Protocol (WSP) "-Nachricht oder mit einer leitungsvermittelten Domain-Nachricht oder mit einer paketvermittelten Domain-Nachricht.

4. Verfahren nach Anspruch 1, 2 oder 3, wobei vor dem Erhalten der Informationen des Clients über die Gerätekennung das Verfahren ferner umfasst: wenn eine öffentliche Anwenderkennung, ID, die mit dem Client gebunden ist, ferner mit anderen Clients als dem Client gebunden ist, dann Erhalten der Informationen des Clients über die Gerätekennung.

5. Verfahren nach einem der Ansprüche 1 bis 3, wobei vor dem Hinzufügen der Informationen des Clients über die Gerätekennung zu der "SIR"-Nachricht das Verfahren ferner umfasst: wenn eine öffentliche Anwender-ID, die mit dem Client gebunden ist, ferner mit anderen Clients als dem Client gebunden ist, dann Hinzufügen der Informationen des Clients über die Gerätekennung zu der "SIR"-Nachricht.

6. Verfahren nach einem der Ansprüche 1 bis 5, wobei die "SIR"-Nachricht ferner enthält: Anwendungsinformationen, um den Client anzuweisen, eine entsprechende Anwendung zu aktivieren, und/oder Informationen, um den Client anzuweisen, entsprechende Informationen zurückzusenden oder eine entsprechende Nachricht gemäß der "SIR"-Nachricht zu senden.

7. Verfahren nach Anspruch 6, wobei das Anweisen des Clients, die entsprechenden Informationen gemäß der "SIR"-Nachricht zurückzusenden, bedeutet: Anweisen des Clients, Informationen über die Gerätekapazität und/oder Präferenzinformationen und/oder Sicherheitsinformationen und/oder Subskriptionsinformationen und/oder Informationen über die Weigerung, die Verbindung aufzubauen, zurückzusenden.

8. Verfahren nach einem der Ansprüche 1 bis 5, das ferner umfasst: Hinzufügen der öffentlichen Anwender-ID, die den Client identifiziert, zu der "SIR"-Nachricht; und wobei das Verfahren ferner umfasst:
Senden der "SIR"-Nachricht an alle Clients entsprechend der öffentlichen Anwender-ID, und Anfragen bei allen Clients, gemäß den Informationen über die Gerätekennung zu bestimmen, ob die "Push"-Sitzungsverbindung auf der Basis des "SIP" mit dem Server entsprechend der "SIR"-Nachricht aufgebaut werden muss.

9. Server, der umfasst:
eine Einheit zum Erhalten von Informationen, die konfiguriert ist, um Informationen eines Clients über eine Gerätekennung zu erhalten, die einer öffentlichen Anwenderkennung, die mit mehreren Clients gebunden ist, entspricht;
eine Einheit zum Hinzufügen einer Nachricht, die konfiguriert ist, um die Informationen des Clients über die Gerätekennung, die von der Einheit zum Erhalten von Informationen erhalten werden, zu einer "Session Initiation Request"-Nachricht, "SIR"-Nachricht, hinzuzufügen; und
eine Einheit zum Senden einer Anfrage, die konfiguriert ist, um die "SIR"-Nachricht, die von der Einheit zum Hinzufügen einer Nachricht hinzugefügt wird, an den Client entsprechend den Informationen des Clients über die Gerätekennung zu senden, um bei dem Client anzufragen, eine "Push"-Sitzungsverbindung auf der Basis eines "Session Initiation Protocol, SIP," mit dem Server entsprechend der "SIR"-Nachricht aufzubauen.

10. Server nach Anspruch 9, der ferner eine Einheit zum Einkapseln einer Nachricht umfasst, wobei die Einheit konfiguriert ist, um die "SIR"-Nachricht, die von der Einheit zum Hinzufügen einer Nachricht hinzugefügt wird, mit einer "Hypertext Transfer Protocol"-Nachricht, HTTP-Nachricht, mit einer "SIP"-Nachricht, mit einer "Short Message Service"-Nachricht, SMS-Nachricht, mit einer "Wireless Session Protocol"-Nachricht, "WSP"-Nachricht, mit einer leitungsvermittelten Domain-Nachricht oder mit einer paketvermittelten Domain-Nachricht einzukapseln.

11. Server nach Anspruch 9 oder 10, der ferner eine Einheit zum Beurteilen einer Kennung, ID, umfasst, wobei die Einheit konfiguriert ist, um dann, wenn eine öffentliche Anwender-ID, die mit dem Client gebunden ist, ferner mit anderen Clients als dem Client gebunden ist, der Einheit zum Erhalten von Informationen den Erhalt der Informationen des Clients über die Gerätekennung anzuzeigen.

12. Server nach Anspruch 9, 10 oder 11, der ferner eine Einheit zum Hinzufügen einer ID umfasst, die konfiguriert ist, um die öffentliche Anwender-ID, die den Client identifiziert, zu der "SIR"-Nachricht hinzuzufügen, wobei
die Einheit zum Senden einer Anfrage ferner konfiguriert ist, um die "SIR"-Nachricht, die von der Einheit zum Hinzufügen der ID verarbeitet wird, an alle Clients entsprechend der öffentlichen Anwender-ID zu senden, und bei all den Clients anzufragen, gemäß den Informationen über die Gerätekennung zu bestimmen, ob die "Push"-Sitzungsverbindung auf der Basis des "SIP" mit dem Server entsprechend der "SIR"-Nachricht aufgebaut werden muss.

## Revendications

1. Procédé d'établissement d'une session de mise en valeur, consistant à :
obtenir des informations d'identité de dispositif d'un client correspondant à une identité d'utilisateur public liée à de multiples clients ;
ajouter les informations d'identité de dispositif du client à un message de demande d'initiation de session, SIR ; et
envoyer le message SIR au client en fonction des informations d'identité de dispositif du client afin de demander au client d'établir une connexion de session de mise en valeur en fonction d'un protocole d'initiation de session, SIP, avec un serveur en fonction du message SIR.

2. Procédé selon la revendication 1, dans lequel ajouter les informations d'identité de dispositif du client au message SIR consiste à :
ajouter les informations d'identité de dispositif du client dans un champ d'entête et/ou un champ de valeur et/ou un corps de message du message SIR.

3. Procédé selon la revendication 1 ou 2, lequel consiste en outre, après avoir ajouté les informations d'identité de dispositif du client au message SIR, à :
encapsuler le message SIR à l'aide d'un message de protocole de transfert hypertexte, HTTP, ou un message SIP, ou un message de service de message court, SMS, ou un message de protocole de session sans fil, WSP, ou un message de domaine commuté par circuit, ou un message de domaine commuté par paquet.

4. Procédé selon la revendication 1, 2 ou 3, lequel consiste en outre, avant d'obtenir les informations d'identité de dispositif du client, à : lorsqu'une identité d'utilisateur public, ID, liée au client est en outre liée à d'autres clients que le client, obtenir les informations d'identité de dispositif du client.

5. Procédé selon l'une des revendications 1 à 3, lequel consiste en outre, avant d'ajouter les informations d'identité de dispositif du client au message SIR, à : lorsqu'une ID d'utilisateur public liée au client est en outre liée à d'autres clients que le client, ajouter les informations d'identité de dispositif du client au message SIR.

6. Procédé selon l'une quelconque des revendications 1 à 5, dans lequel le message SIR contient en outre :
des informations d'application pour demander au client d'activer une application correspondante, et/ou des informations pour demander au client de renvoyer des informations correspondantes ou d'envoyer un message correspondant en fonction du message SIR.

7. Procédé selon la revendication 6, dans lequel demander au client de renvoyer les informations correspondantes en fonction du message SIR consiste à :
demander au client de renvoyer des informations de capacité du dispositif, et/ou des informations de préférence, et/ou des informations de sécurité, et/ou des informations d'abonnement et/ou des informations de refus d'établissement de la connexion.

8. Procédé selon l'une quelconque des revendications 1 à 5, consistant en outre à : ajouter l'ID d'utilisateur public identifiant le client au message SIR ; et
lequel procédé consiste en outre à :
envoyer le message SIR à tous les clients correspondants à l'ID d'utilisateur public et demander à tous les clients de déterminer, en fonction des informations d'identité de dispositif, si la connexion de session de mise en valeur basée sur le SIP doit être établie à l'aide du serveur en fonction du message SIR.

9. Serveur comprenant :
une unité d'obtention d'informations conçue pour obtenir des informations d'identité de dispositif d'un client correspondant à une identité d'utilisateur public liée à de multiples clients ;
une unité d'addition de message conçue pour ajouter les informations d'identité de dispositif du client obtenues par l'unité d'obtention d'informations à un message de demande d'initiation de session, SIR ; et
une unité d'envoi de demande conçue pour envoyer le message SIR ajouté par l'unité d'addition de message au client en fonction des informations d'identité de dispositif du client afin de demander au client d'établir une connexion de session de mise en valeur en fonction d'un protocole d'initiation de session, SIP, avec un serveur en fonction du message SIR.

10. Serveur selon la revendication 9, comprenant en outre une unité d'encapsulation de message conçue pour encapsuler le message SIR ajouté par l'unité d'addition de message à l'aide d'un message de protocole de transfert hypertexte, HTTP, ou un message SIP, ou un message de service de message court, SMS, ou un message de protocole de session sans fil, WSP, ou un message de domaine commuté par circuit, ou un message de domaine commuté par paquet.

11. Serveur selon la revendication 9 ou 10, comprenant en outre une unité d'estimation d'identité, ID, conçue pour, lorsqu'une ID d'utilisateur public liée à un client est en outre liée à d'autres clients que le client, indiquer à l'unité d'obtention d'informations d'obtenir les informations d'identité de dispositif du client.

12. Serveur selon la revendication 9, 10 ou 11, comprenant en outre une unité d'addition d'ID conçue pour ajouter l'ID d'utilisateur public identifiant le client au message SIR, dans lequel :
l'unité d'envoi de demande est en outre conçue pour envoyer le message SIR traité par l'unité d'addition de message à tous les clients correspondant à l'ID d'utilisateur public, et demander à tous les clients de déterminer, en fonction des informations d'identité de dispositif, si la connexion de session de mise en valeur basée sur le SIP doit être établie à l'aide du serveur en fonction du message SIR.
